Europäisches Patentamt

(19) European Patent Office

Office européen des brevets

(11) Numéro de publication: **0 214 894**
**A1**

## (12) DEMANDE DE BREVET EUROPEEN

(21) Numéro de dépôt: 86401774.4

(22) Date de dépôt: 07.08.86

(51) Int. Cl.⁴: **G 06 M 11/04**
**G 06 F 15/70**

(30) Priorité: 07.08.85 FR 8512119

(43) Date de publication de la demande:
18.03.87 Bulletin 87/12

(84) Etats contractants désignés:
DE GB NL

(71) Demandeur: ASSOCIATION POUR LA RECHERCHE ET LE
DEVELOPPEMENT DES METHODES ET PROCESSUS
INDUSTRIELS (ARMINES)
60, Boulevard Saint-Michel
F-75272 Paris Cédex 06(FR)

(72) Inventeur: Meyer, Fernand
61, rue de Fontainebleau
F-77250 Veneux-les-Sablons(FR)

(74) Mandataire: Fort, Jacques et al,
CABINET PLASSERAUD 84, rue d'Amsterdam
F-75009 Paris(FR)

(54) Procédé et dispositif de détection des particules contrastées dans une image.

(57) Le dispositif effectue sur l'image une transformation consistant à retenir uniquement les pixels x tels que la particule connexe aux pixels, obtenue par seuillage à la valeur F(x)-H, où H est un seuil prédéterminé, ne contient aucun segment de longueur R déterminée et ayant au moins une orientation déterminée.

FIG.3.

0214894

## Procédé et dispositif de détection des particules contrastées dans une image

L'invention concerne le domaine du traitement d'images définies par des points élémentaires ou pixels présentant chacun une caractéristique, telle qu'une brillance, définie par la valeur numérique d'une fonction, traitement destiné à détecter les particules présentant, par rapport au fond, un contraste positif ou négatif élevé. Elle trouve une application particulièrement importante dans la lecture et l'interprétation automatiques d'images de milieux de réaction de microlymphocyto-toxicité couramment utilisés en immunologie.

De telles réactions sont en particulier utilisées pour déterminer le groupe HLA (antigène de leucocytes humains) d'un individu. Le système HLA permet de différencier les êtres humains par la composition et la structure biochimiques des molécules se trouvant à la surface de pratiquement toutes les cellules de l'organisme. Ce système constitue le centre de commande de la reconnaissance de ce qui appartient à l'être humain considéré et de ce qui ne lui appartient pas. Il joue un rôle essentiel dans les processus de défense de l'organisme et il permet d'identifier l'individu considéré. L'identification est notamment indispensable dans le domaine des greffes et transplantations d'organes et dans celui de la transfusion des leucocytes et plaquettes du sang. Le groupage HLA est également très important pour établir le diagnostic de certaines maladies (hémochromatoses, spondylarthrites ankylosantes).

On a évidemment intérêt à effectuer le typage sur les lymphocytes qui contiennent le maximum d'antigènes de surface. Pour cela, on met en présence les lymphocytes avec des anti-sérums contenant des anticorps anti-HLA prélevés sur des femmes immunisées pendant leur grossesse. Dans le cas où sérum et lymphocytes ont une spécificité HLA en commun, il se fait une réaction antigènes-anticorps qui se manifeste par une action lytique. Les cellules sensibilisées meurent et apparaissent comme des disques sombres. Par contre, les cellules vivantes, une fois colorées par l'éosine orange ou le bleu trypan, apparaissent comme des disques plus petits que les disques sombres des cellules mortes, entourés chacun d'un fin liseré sombre lui-même entouré d'un halo clair. On pourra trouver la description d'une technique complète de préparation des échantillons dans l'article de Paul I. Terasaki, "Microdroplet Testing for HLA-A, -B, -C and -D Antigens", American Journal of Clinical Pathology, Vol. 69, No. 2, pp. 103-120, Février 1978.

La lecture HLA consiste à reconnaître et à compter, dans l'image du milieu de réaction, les cellules mortes et les cellules vivantes et de les différencier de divers artefacts. Chaque réaction lymphocytes-sérum permet uniquement de déterminer s'ils ont ou non une spécificité commune. Il s'agit donc d'une information très pauvre. Pour identifier le groupe HLA de cellules initialement inconnues, il faut les faire réagir avec un nombre important de sérums connus, porteurs de toutes les spécificités présentes dans la population (120 sérums environ). De même, pour identifier les anticorps dans le sérum inconnu, il faut le faire agir avec tout un ensemble de cellules ayant des groupes connus et différents.

En pratique, ces réactions se font dans des grilles de plastique contenant 60 ou 90 puits ou cupules de 200 µl. On réalise une réaction sérum-lymphocytes dans chaque cupule.

Actuellement, la lecture est faite par un opérateur en microscopie en contraste de phase, ce qui constitue une opération répétitive, fastidieuse et sujette à erreur.

**0214894**

Des tentatives ont été faites pour réaliser un appareil de groupage HLA à fonctionnement automatique. Le document US-A-4 318 886 décrit un appareil de ce genre qui compare les particules qui apparaissent sur une image en contraste de phase avec des modèles. Cette approche a une sélectivité insuffisante en présence d'artefacts.

Ces mêmes inconvénients se retrouvent dans de nombreux domaines de l'analyse d'image en vue de rechercher des particules caractéristiques.

On a déjà proposé de nombreux procédés et dispositifs de transformation d'images numériques combinant des opérations maintenant bien connues, telles que l'érosion, la dilatation, la fermeture et l'ouverture. On pourra trouver une description de ces opérations élémentaires en pages 424-478 de l'ouvrage "Image analysis and mathematical morphology", Serra, Academic Press, 1982. Parmi les combinaisons de telles opérations simples, on a déjà proposé une transformation qu'on peut qualifier de "transformation chapeau haut-de-forme" décrite dans l'article de F. Meyer "Contrast features extraction" dans Special Issues of Practical Metallography, Dr. Riederer Verlag GmbH, Stuttgart, 1978, pp. 374-380, en vue de déterminer des formes de chromatine.

En dépit de leur intérêt, les transformations d'images déjà connues présentent une sélectivité insuffisante pour permettre de détecter, avec une sélectivité suffisante, des objets de petite taille, dont la plus grande dimension n'excède pas une longueur fixée par l'opérateur ; ayant un contraste (fixe ou fonction du niveau de gris absolu) dépassant un seuil fixé par l'opérateur ; et ayant des niveaux de "gris" également situés dans une plage préalablement définie par l'opérateur.

L'invention vise notamment à fournir un procédé de détection de particules mettant en oeuvre une transformation d'images assurant une meilleure sélectivité que ceux antérieurement connus. Dans ce but, l'invention propose notamment un procédé de détection d'objets ayant un contraste par rapport au fond dépassant une valeur déterminée et ayant une taille déterminée, dans une image définie par des pixels x affectés chacun d'une valeur numérique $F(x)$ représentant une caractéristique optique, caractérisé en ce qu'on effectue sur l'image une transformation consistant à retenir uniquement les pixels x tels que la particule connexe aux pixels, obtenue par seuillage à la valeur $F(x)-H$, où H est une valeur numérique prédéterminée, n'est pas préservée par un processus de sélection basé sur des critères de forme et impliquant des transformations successives de morphologie mathématique qui font apparaître, uniquement dans les plus grandes particules, un marqueur à partir duquel les particules peuvent être régénérées par reconstruction de grains.

Une particule connexe à un pixel de base $x_i$ est définie comme une particule consistant en tous les pixels qui sont reliés au pixel de base par une séquence ininterrompue de pixels mutuellement voisins, remplissant une même condition. Dans le cas présent cette condition est le fait que tous les pixels voisins de la particule ont un niveau supérieur à $F(x_i)-H$.

Dans un premier mode de mise en oeuvre de l'invention, seuls les pixels $\underline{x}$ dont la particule connexe ne contient aucun convexe appartenant à une famille prédéterminée sont retenus.

C'est le choix de la famille de convexes qui déterminera le type de particules détecté, et notamment permettra de sélectionner soit des particules sans orientation préférentielle, soit au contraire des particules ayant une forme et/ou une orientation déterminées. En particulier, le critère peut être que la particule connexe ne contient aucun segment de longueur R déterminée. Dans certains cas, une seule orientation des segments sera prise en considération (cas d'un milieu anisotrope par exemple). Dans d'autres, on adoptera un faisceau d'orientations proches les unes des autres. Mais en général, on adoptera plusieurs orientations régulièrement réparties angulairement.

Le convexe peut n'être pas linéaire, mais surfacique. Souvent, il se rapprochera dans ce cas du disque, tout en étant polygonal, par exemple carré ou octogonal si l'image est définie par des pixels répartis suivant une trame carrée, hexagonal ou dodécagonal si la trame est hexagonale.

La transformation qui vient d'être définie ci-dessus peut être qualifiée de "transformation haut-de-forme connexe", linéaire ou surfacique, par analogie avec les transformations déjà connues. Elle est évidemment applicable que la valeur numérique F soit croissante ou décroissante en fonction de la brillance. Le terme "brillance" lui-même doit s'appliquer également au cas où les particules se différencient non par la quantité de lumière émise ou réfléchie, mais par leur couleur.

Dans un second mode de mise en oeuvre de l'invention, un pixel est retenu si la particule connexe disparaît lorsqu'elle est soumise à :

s étapes succesives de squelettisation (ou érosion) partielle, et

p étapes successives d'ébarbulage,

s et p étant des nombres entiers choisis en fonction de la taille et de la forme des objets à détecter dans l'image.

La valeur F (x) pour chaque pixel peut être la valeur dans l'image d'origine ou peut être une valeur obtenue après filtrage de l'image pour obtenir une image dérivée. Le terme "filtrage" désigne une opération de morphologie mathématique définie par J.Serra et al dans "M-filters, ICASSP 1982, Proceedings IEEE Int. Conference on Acoustics, Speech and Signal Processing, Paris, 3-5 Mai 1982, pp. 843-845".

Le procédé qui vient d'être décrit a des applications qui vont largement au-delà de la détection des lymphocytes en vue du typage HLA. Il est applicable chaque fois qu'il est nécessaire de détecter des particules dont la forme et le contraste par rapport au fond permettent de les différencier. A titre d'exemple, on peut citer, en biologie, la recherche des cellules marquées par des anticorps, en technologie des poudres, la détermination de grains particuliers.

En plus de la transformation d'images, le procédé de détection comportera des étapes qui dépendront de la forme précise des objets à détecter. Dans le cas par exemple du typage HLA, il convient de détecter et d'estimer le nombre des cellules mortes (constituant des objets sombres sur fond clair) et celui des cellules vivantes (constituant des objets clairs, plus petits que les précédents, sur fond sombre).

La détection des cellules mortes pourra comporter, après la transformation en contraste négatif, une mesure de surface des cellules ou, plus généralement, l'intégrale d'une quantité croissante quelconque sur une image dérivée, telle que l'image gradient, en vue de vérifier la qualité de mise au point, une ouverture binaire destinée à éliminer les objets trop petits, et une mesure du nombre de connexité, permettant d'estimer le nombre de cellules mortes.

La détection des cellules vivantes pourra comporter, après une transformation en contraste positif, une mesure de surface visant à vérifier la qualité de la mise au point (ou, plus généralement, une mesure liée à la mise au point automatique), l'élimination des particules claires trouvées à l'intérieur d'un dilaté prédéterminé des cellules mortes détectées et enfin le comptage des cellules vivantes.

L'interprétation des résultats comportera une décision sur la qualité suffisante de la mise au point, une décision sur la qualité de la cupule (les champs non analysables étant rejetés pour examen visuel ultérieur) et l'attribution d'une note par une règle de correspondance déterminée empiriquement sur un jeu d'essai de plaques permettant d'appliquer un processus d'apprentissage.

L'invention propose également un dispositif de mise en oeuvre du premier mode de réalisation ci-dessus défini, comportant un processeur morphologique de voisinage permettant érosion, dilatation, ouverture comportant une sortie reliée à un bus de sortie et une entrée reliée à deux bus d'entrée, par l'intermédiaire d'une unité de calcul pouvant effectuer des opérations d'addition, de soustraction, de recherche de minimum et de maximum entre pixels présents simultanément sur les bus d'entrée ; et une mémoire d'images comprenant plusieurs parties de capacité suffisante pour stocker chacune une image complète, dont l'entrée est reliée au bus de sortie, permettant d'appliquer simultanément sur les deux bus d'entrée les représentations numériques de deux pixels correspondants de deux images stockées.

Un tel dispositif permet d'effectuer la reconstruction de grains nécessaire, à l'aide de son processeur morphologique pour une dilatation et une érosion, et de l'unité arithmétique et logique. Mais, lorsqu'on souhaite une vitesse de traitement élevée, on prévoira un dispositif comportant de plus un processeur morphologique de reconstruction de grains avantageusement avec réécriture, relié aux bus d'entrée et agencé pour fournir sur le bus de sortie un pixel reconstruit à la fois, pour enregistrement dans la mémoire d'images.

L'invention sera mieux comprise à la lecture de la description qui suit de modes particuliers d'exécution donnés à titre d'exemples non limitatifs, ainsi que de la comparaison qui en est faite avec l'art antérieur. La description se réfère aux dessins qui l'accompagnent, dans lesquels :

- la Figure 1 est une représentation schématique, en perspective, d'une surface topographique visualisée en images à niveau de gris,

- la Figure 2 montre une particule obtenue, sur la Figure 1, par le seuillage à niveau H au-dessous d'un pixel,

- la Figure 3 est un schéma destiné à faire apparaître le principe de la transformation chapeau haut-de-forme linéaire, ·

- la Figure 4 montre diverses formes de particules et l'application à ces particules de la transformation chapeau haut-de-forme linéaire,

- la Figure 5, similaire à la Figure 4, montre une particule à laquelle est appliquée la transformation chapeau haut-de-forme linéaire connexe suivant trois directions,

- la Figure 6, similaire à la Figure 4, montre l'application de la transformation "chapeau haut de forme" à l'aide d'une base constituée par un octogone, en trame carrée,

- la Figure 7 est un synoptique montrant une constitution possible d'un analyseur d'image,

- la Figure 8 est un synoptique montrant une constitution possible de processeur numérique à réécriture utilisable, dans le dispositif de la Figure 7, pour mettre en oeuvre l'invention,

- la Figure 9 est un synoptique d'une constitution possible du processeur numérique de la Figure 8, permettant d'effectuer la reconstruction de grains.

- la Figure 10 montre une autre surface topographique ayant plusieurs niveaux de gris;

- les Figures 11.1 à 11.6 indiquent les particules obtenues par seuillage de l'objet de la figure 10 à plusieurs niveaux ;

- les Figures 12.1 à 12.6 sont des représentations des particules obtenues par pelage homotopique partiel effectué sur les particules des figures 11.

- les Figures 13.1 à 13.6 sont des représentations de la modification provoquée, sur les figures 12.1 à 12.6, par ébarbulage partiel ;

- les Figures 14.1 à 14.6 indiquent la reconstruction des particules érodées des figures 12 à partir des diverses particules des figures 13 ; et

- les Figures 15.1 à 15.6 sont constituées par les différences entre les figures correspondantes 12 et 14.

Avant de décrire en détail l'invention, il peut être utile de rappeler en quoi consiste la transformation "chapeau haut-de-forme" connue.

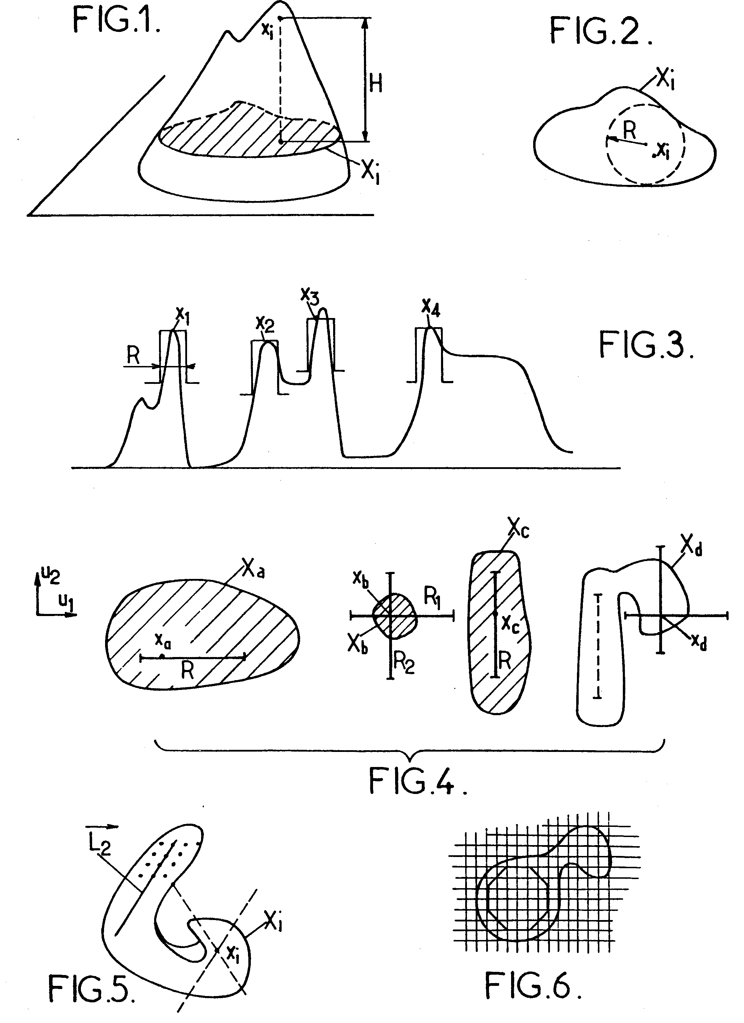

Une image constituée de pixels à niveaux de gris différents peut être représentée sous forme d'un relief à trois dimensions. Le noir correspond au niveau O. Les pixels les plus clairs de l'image sont ceux dont l'altitude F est la plus forte, les plus sombres sont ceux dont l'altitude est la plus basse. La Figure 1 montre une telle surface topographique en relief. Pour chaque pixel $x_i$, on considère le plan de coupe horizontal qui se trouve à l'altitude $F(x_i)-H$, $F(x_i)$ étant la valeur de la fonction F pour $x_i$ et H étant la hauteur du chapeau haut-de-forme. La projection de $x_i$ sur le plan de coupe se trouve dans une particule connexe $X_i$ (Figure 2).

La transformation chapeau haut-de-forme constitue un moyen permettant de retenir ou de rejeter chaque pixel $x_i$ suivant qu'il remplit ou non un critère particulier.

Dans la transformation circulaire de rayon R, un

pixel $x_i$ est retenu uniquement s'il n'existe aucun disque de rayon R contenant le pixel $x_i$ et dont tous les points ont un niveau de gris supérieur ou égal à $F(x_i)$-H.

On voit que dans le cas illustré en Figure 2, le pixel $x_i$ ne sera pas retenu étant donné qu'il existe des disques de rayon R contenant $x_i$ et contenus tout entiers dans la particule $X_i$.

Une variante de la transformation "chapeau haut de forme" est constituée par la transformation chapeau haut-de-forme linéaire. On ne retient un pixel $x_i$ que si la particule connexe obtenue par seuillage ne contient aucun segment de longueur égale ou supérieure à une valeur R passant par $x_i$ et ayant une orientation spécifiée par l'opérateur. Cela revient, comme le montre la Figure 3, à appliquer la transformation sur une coupe de la surface topographique suivant la direction spécifiée. On voit sur la Figure 3 que les pixels x1 et x3 seront retenus, les pixels x2 et x4 rejetés. En général, la transformation chapeau haut-de-forme linéaire sera appliquée suivant plusieurs orientations représentables sur la trame de l'image. On peut notamment avoir deux orientations à 90° l'une de l'autre, ces deux orientations plus deux orientations à 45°, ou enfin, ce qui est souvent avantageux, trois orientations suivant une direction de balayage de ligne et deux directions à π/3 et 2π/3 par rapport à la première.

Sur la Figure 4, similaire à la Figure 2, on a représenté plusieurs formes de particules X correspondant au seuillage F(x)-H et l'application de la transformation chapeau haut-de-forme à base linéaire R. Un pixel $x_i$ est retenu s'il est impossible de placer un segment de longueur R (taille de la transformation), ayant l'une de deux orientations à 90°, entièrement dans la particule $X_i$.

L'opération est relativement aisée à effectuer :

en effet le lieu de tous les segments R1 de longueur R et d'orientation fixe $u_1$ inclus dans $X_i$ est l'ouvert linéaire de $X_i$ par ce segment R1. De même, dans l'orientation $u_2$, le lieu de tous les segments R2 est l'ouvert linéaire de $X_i$ par ce segment. L'opération dans son ensemble revient à prendre l'union des ouverts de $X_i$ par les segments R1 et R2 et partir de cette union d'ouverts, à faire une reconstruction de grains de la particule initiale, ce qui permet d'attendre le point $x_d$ et de retenir $x_i$ s'il n'appartient pas à cette union.

Dans le cas de la Figure 4, on voit qu'on retiendra $x_b$ et $x_d$, alors qu'on rejettera $x_a$ et $x_c$.

L'invention utilise, dans le cas de la Figure 5, une transformation qui se différencie de la précédente en ce que le critère est le suivant : un point $x_i$ est retenu s'il est impossible d'inscrire dans la particule $X_i$ un segment de longueur R, ayant une des orientations représentables sur une trame d'image, mais sans qu'il soit nécessaire que le segment passe par le pixel $x_i$. Il suffit que ce segment s'inscrive dans la particule $X_i$ connexe à $x_i$ : on voit que cette transformation écarte le pixel $x_d$.

On constate immédiatement que cette transformation est beaucoup plus sélective que celle qui utilise une base de diamètre égal à L (Figure 2) ou une base linéaire de longueur L qui doit passer par le pixel testé. En particulier, la Figure 5 montre une particule $X_i$ dont aucun pixel ne sera retenu en cas de transformation chapeau haut-de-forme linéaire connexe suivant trois directions, étant donné que le vecteur L2, orienté selon l'une des trois directions retenues, s'inscrit dans la particule connexe $X_i$. Sur la Figure 5, l'emplacement de quelques pixels a été indiqué pour faciliter la lecture.

La Figure 6 montre une variante utilisant une base octogonale qui assure également une sélectivité beaucoup plus grande que les transformations antérieures.

La mise en oeuvre du procédé peut être réalisée en mettant en oeuvre des circuits à logique câblée effectuant soit des comparaisons de nombres à plusieurs éléments binaires (logique que l'on qualifiera de numérique), soit des comparaisons sur éléments binaires seulement. On remarquera à ce sujet que, pour chaque particule $X_i$ correspondant à un seuil H (telle que la particule montrée en Figures 1 et 2), les comparaisons à effectuer pour déterminer si on peut inscrire dans $X_i$ un vecteur de longueur L portent uniquement sur des nombres binaires.

On décrira tout d'abord un logigramme utilisable pour appliquer la transformation "chapeau haut-de-forme linéaire connexe" à l'aide d'un système numérique, utilisant des transformations morphologiques d'images à niveaux de gris par des opérateurs à niveaux de gris. Le dispositif requis pour mettre en oeuvre le procédé doit comporter des moyens de représentation d'image suivant une trame (qu'on supposera hexagonale, à trois directions 0°, 60° et 120° dans ce qui suit) sous forme de nombres à plusieurs éléments binaires ou "bits". Le dispositif comporte une mémoire d'image B, destinée à stocker l'image numérique à transformer, et trois mémoires A, C et M initialement vides, destinées à recevoir les niveaux de gris. Dans ce qui suit, on désignera les vecteurs $L_i$ de longueur commune L (longueur de base) orientés selon les trois directions à 0°, 60° et 120° par L1, L2 et L3.

Les opérations successives peuvant alors être celles décrites ci-après.

$(B)_{L1} \rightarrow A$ : Ouverture par le segment L1 à 0° de l'image stockée en mémoire B et stockage du résultat dans A.

$(B)_{L2} \to C$ :  Ouverture de l'image par le segment L2 suivant une direction à 60° de la première et stockage du résultat dans C.

Max(A,C) → A :  On recherche, pour chaque pixel, le maximum dans A et C et on stocke le résultat dans A.

$(B)_{L3} \to C$ :  Ouverture de l'image stockée en mémoire B par le segment L3, à 120° de la première direction, et stockage du résultat dans C.

Max(A,C) → A :  On recherche le maximum entre A et C, point par point, et on stocke le résultat dans A.

La mémoire A contient ainsi finalement le maximum des trois ouvertures linéaires de B par les vecteurs L1, L2 et L3.

RECONS(B,A) → A :  On effectue une reconstruction de grains.

Cette reconstruction peut être effectuée par une technique connue, telle que celle décrite en pages 401-403 dans l'ouvrage de J. Serra déjà mentionné. Il est cependant plus avantageux d'utiliser le procédé décrit dans la demande de brevet FR.85.12.120.

A-B → B :  On effectue une soustraction arithmétique point à point contenus des mémoires B et A.

Seuil H(A) → M :  Le seuillage au niveau H prédéterminé fournit le résultat recherché.

Ce logigramme est susceptible de nombreuses variantes. Par exemple, on peut remplacer chaque ouverture linéaire par $L_i$ par une érosion linéaire par $L_i$. Le résultat est le même. Suivant le dispositif de calcul dont on dispose, il est simplement obtenu plus rapidement ou moins rapidement.

Au lieu d'une solution mettant en oeuvre des nombres à plusieurs bits, on peut utiliser une solution qui ne met en oeuvre que des nombres binaires et permet d'utiliser des mémoires destinées à recevoir des nombres binaires. La simplification ainsi obtenue est contrebalancée par un ralentissemet.

Les étapes du procédé restent similaires à celles qui ont déjà été décrites. Elles ne seront que brièvement énumérées ci-après.

Le principe mis en oeuvre consiste à accumuler dans une mémoire binaire "RESULTAT" les contributions obtenues pour tous les couples de seuil S et S-H. La contribution pour chaque seuil ou niveau de gris S (S étant évidemment supérieur à H) est obtenue par une séquence qui sera répétée autant de fois qu'il est nécessaire, c'est-à-dire pour toutes les valeurs de S supérieures à H prédéterminé.

$S \rightarrow A$ :        On stocke dans une première mémoire binaire A tous les pixels dépassant le seuil S.

$S-H \rightarrow B$ :        On stocke dans une seconde mémoire binaire B tous les pixels dépassant le seuil S-H.

$U_i(B)_{Li} \rightarrow C$ :        On effectue l'union de toutes les ouvertures linéaires de taille L prédéterminée (les ouvertures pouvant être remplacées par des érosions) et on stocke le résultat dans C.

RECONS(B,C) → C :      On effectue une reconstruction de grains partielle ou totale, avec ré-écriture ou non du contenu de B à partir du contenu de C.

A/C → A :         On effectue la différence ensembliste de A et C.

RESULTAT = R ∪ A     On accumule les points retenus dans la mémoire "RESULTAT".

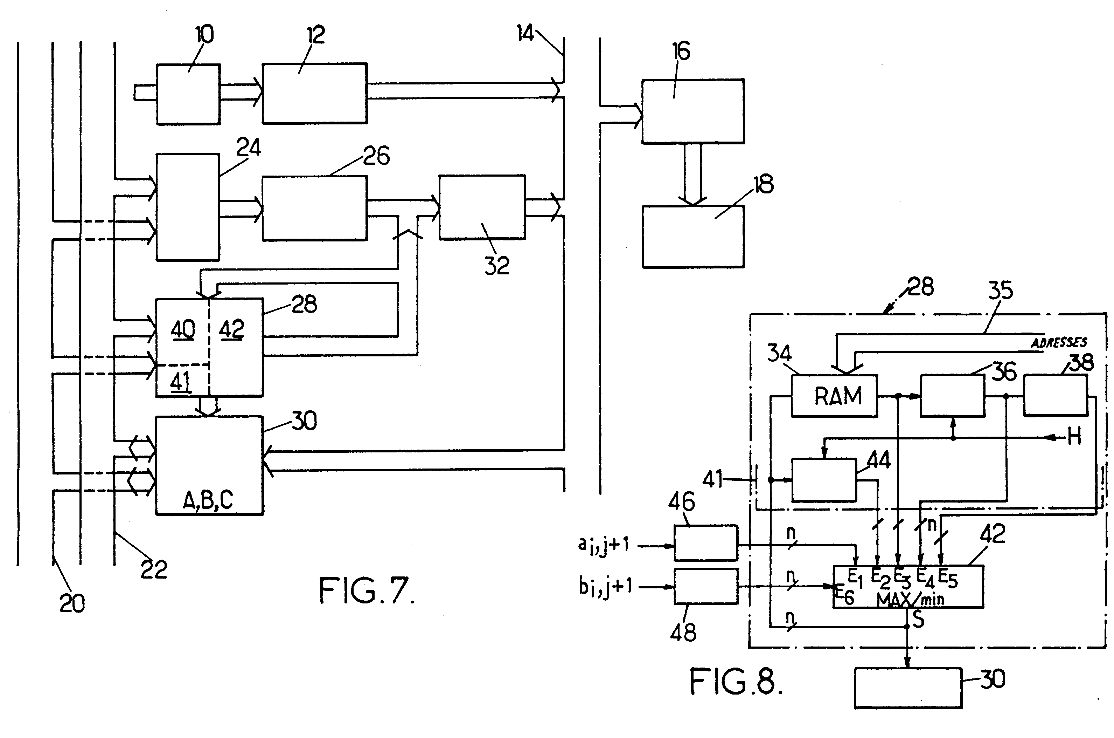

La mise en oeuvre du procédé qui vient d'être décrit peut être réalisée dans un analyseur d'image ayant une constitution générale classique, telle que celle de la Figure 7, mais comportant un processeur morphologique à ré-écriture ayant la constitution montrée en Figure 8.

L'analyseur de la Figure 7 comporte une caméra 10 d'acquisition d'image, dont les signaux de sortie sont numérisés dans un circuit 12, chaque pixel étant représenté par un nombre de plusieurs éléments binaires ou "bits" (image numérique). Les signaux sont appliqués sur un bus d'écriture 14 relié à une mémoire de visualisation 16 ayant un contenu correspondant au nombre de pixels d'une image à fournir sur un organe de visualisation 18 tel qu'un tube cathodique.

L'analyseur comporte deux bus de lecture 20 et 22 ayant la même constitution, pouvant être reliés à d'autres parties, telles que des enregistreurs sur bande, etc. Les données circulant sur ces bus de lecture sont appliquées à une unité arithmétique et logique 24 pouvant réaliser des opérations d'addition, de soustraction, de recherche de minimum et de recherche de maximum entre pixels. La sortie de l'unité 24 est reliée à un processeur morphologique de voisinage 26, qu'on supposera prévu pour effectuer une au moins des ouvertures linéaires classiques dans différentes directions.

Les bus de lecture 20 et 22 sont également reliés à un processeur morphologique 28 prévu pour effectuer une reconstruction de grain avec ré-écriture. Ce processeur 28 peut avoir notamment la constitution montrée en Figure 8. La sortie des processeurs 26 et 28 est appliquée, par un bus commun, à un circuit 32 de mesure d'intégrale, dont le rôle est de fournir un critère d'arrêt du processeur à ré-écriture 28. Le circuit 32 peut également être un système composé d'un comparateur et d'une bascule agencés de manière à ce que la bascule se bloque à 1 dès qu'un des pixels traités atteint une valeur qui n'est plus modifiée par une transformation supplémentaire.

Enfin, les bus sont reliés à une mémoire vive 30 ayant une capacité suffisante pour stocker trois images complètes dans trois champs A, B, C.

Le fonctionnement de cet analyseur est le suivant :

L'image acquise par la caméra 10 est numérisée, puis envoyée par le bus 14 vers la mémoire d'image 30. Le logigramme mis en oeuvre est alors celui de la page 11 et les opérations successives déjà décrites interviennent de la façon suivante.

$(B)_{L1} \rightarrow A$ :  L'image lue dans une partie B de la mémoire transite par un des bus de lecture 20 et 22, subit une ouverture linéaire par L 1 dans le processeur morphologique de voisinage 26 puis transite par le bus d'écriture 14 et est stockée dans une partie A de la mémoire 30.

$(B)_{L2} \rightarrow C$ :  La même opération que précédemment est effectuée, mais avec un segment L2 à 60° de L1. Elle donne naissance à une image stockée dans une partie C de la mémoire 30.

Max(A,C) → A :   Les contenus des parties A et C de la mémoire 30 transitent chacun par un des bus de lecture 20 et 22 et leur maximum est calculé dans l'unité arithmétique et logique 24. Le résultat transite par le bus d'écriture 14 et il est écrit dans la partie A de la mémoire d'image.

(B)$_{L3}$ → C :   La même opération que précédemment est effectuée, mais avec le segment L3 ayant une troisième orientation.

Selon la trame utilisée et le degré de précision souhaité, on pourra utiliser plus ou moins de trois orientations.

Max(A,C) → A :   Même opération que précédemment.

RECONS (B,A) → B :   Les contenus des parties B et A de la mémoire 30 transitent par les bus de lecture 20 et 22 et arrivent au processeur morphologique à réécriture 28. Le résultat passe dans l'unité de mesure 32 où il subit une intégration. Puis il est renvoyé dans la partie A de la mémoire par le bus d'écriture.

Après un premier passage, au cours duquel les images sont balayées dans le sens video direct, un second passage est effectué dans le sens video inverse.

Puis tout le processus est répété de façon itérative jusqu'à ce que la mesure d'intégrale ou le comparateur d'égalité indique que l'image A ne subit aucun changement d'un passage au suivant.

La reconstruction de grains numérique d'une image numérique désignée par A, à partir d'une image numérique B, peut s'effectuer en répétant, jusqu'à obtention de la stabilité, la mise en oeuvre de l'algorithme :

$$A' = Min [A \oplus H, B]$$

où $\oplus$ désigne la dilatation,

A' étant substitué à A pour l'opération suivante et H étant l'hexagone (ou le carré) élémentaire dans la trame.

L'algorithme en ré-écriture exposé ci-dessous permet d'atteindre le même résultat avec un nombre de passes bien plus faible que l'algorithme classique.

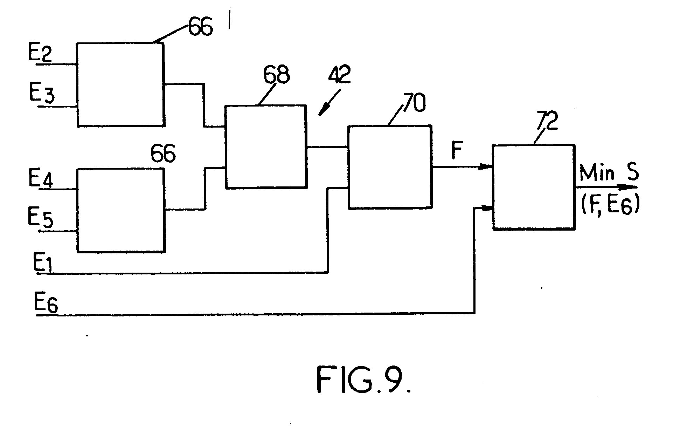

Le dispositif de mise en oeuvre pourra être celui montré en Figures 7 et 8, mais avec un processeur 42 qui, dans le cas particulier d'une trame carrée en connexité huit, aura par exemple la constitution montrée en Figure 9.

Dans le cas du balayage video direct, les valeurs présentées au processeur 42 doivent être :

$$a^*_{i-1,j-1} \qquad a^*_{i-1,j} \qquad a^*_{i-1,j+1}$$

$$a^*_{i,j-1} \qquad a_{i,j}$$

où a* désigne la valeur ré-écrite de a.

Pour la reconstruction de grains, on présente aussi la valeur $b_{i,j}$ issue de la mémoire B et correspondent à $a_{i,j}$.

La nouvelle valeur $a^*_{ij}$ du pixel (i,j) se définit alors en fonction de son voisinage par :

$$a^*_{ij} = Min[b_{ij}, Max(a_{ij}, a^*_{i,j-1}, a^*_{i-1,j+1}, a^*_{i-1,j},$$
$$a^*_{i-1,j-1})]\dots\dots\dots\dots\dots\dots\dots(3)$$

en balayage video direct.

En balayage video inverse, le voisinage est inversé et la transformation à effectuer sur chaque pixel de l'image numérique A s'effectue suivant l'algorithme :

$$a^*_{ij} = \text{Min}[b_{ij}, \text{Max}(a_{ij}, a^*_{i,j+1}, a^*_{i+1,j+1}, a^*_{i+1,j}, a^*_{i+1,j-1})]\dots\dots\dots\dots\dots\dots \text{(3bis)}$$

Afin que l'analyseur de la Figure 7 puisse mettre en oeuvre le procédé suivant l'invention, le processeur morphologique 28 est constitué de deux modules 40 et 42. Le module 40 constitue dispositif de ré-écriture et a pour fonction de présenter au module 42, constituant processeur, tous les arguments dont il a besoin pour effectuer la reconstruction de grains à ré-écriture.

De façon à minimiser le nombre d'appels à la mémoire d'image 30, le dispositif de ré-écriture 40 comporte avantageusement une mémoire locale 41 où sont stockés tous les pixels ayant déjà servi à la transformation des pixels rencontrés avant le pixel $a_{ij}$ lors du balayage et qui vont encore servir pour transformer les pixels qui suivent le pixel $a_{ij}$. Dans d'autres applications, la mémoire locale 41 est prévue pour recevoir également des pixels à la fois avant et après $a_{ij}$.

Dès qu'elle est calculée par le processeur 42, la nouvelle valeur $a^*_{ij}$ est inscrite dans la mémoire d'image 30 ainsi que dans la mémoire locale 41 du dispositif 40 afin de servir d'argument pour la transformation des pixels suivants.

Le processeur de ré-écriture 28 et sa mémoire auront une constitution qui dépend du type de trame et du graphe de voisinage adoptés. La Figure 8 montre une constitution du processeur 28 utilisable lorsque le balayage est du type video, en sens direct et en sens inverse, correspondant à une trame rectangulaire. Mais, comme cela a déjà été indiqué, une trame hexagonale est utilisable.

La mémoire locale 41 montrée en Figure 8 doit rendre simultanément disponibles, pour le processeur 42, le pixel sur lequel s'effectue la transformation et quatre pixels déjà transformés. Pour cela, elle comporte une mémoire vive 34, ayant une capacité correspondant à n-1 pixels. Cette mémoire est adressable en lecture et en écriture par le bus d'adresse 35. La sortie de données de la mémoire 34 attaque deux éléments de mémorisation 36 et 38 montés en cascade, ayant chacun une capacité d'un seul pixel (bascules en général). La sortie du processeur 42 est reliée à l'entrée de la mémoire 34 et à l'entrée d'un élément de mémoire 44 ayant une capacité d'un seul pixel, ainsi qu'au bus d'écriture de la mémoire 30.

Par ailleurs, la mémoire 30 est également reliée par des bus non représentés à des éléments 46 et 48 de mémorisation dont la capacité est d'un seul pixel.

On voit que les sorties de la mémoire 34, et des éléments de mémorisation 36, 38, 44, 46 et 48 permettent de présenter simultanément au processeur 42 les valeurs de six pixels. Ces six valeurs sont appliquées sur des entrées E1, E2,... E6. La transformation à effectuer détermine la constitution du processeur 42 et la répartition de pixels stockés dans les éléments de mémorisation.

Le montage représenté permet notamment d'obtenir la fonction érosion en trame carrée et la reconstruction de grains.

On peut notamment disposer simultanément, à la sortie des divers éléments :

- pour l'élément de mémorisation 46, du pixel $a_{ij}$, en même temps qu'il y a lecture du pixel $a_{i,j+1}$ dans la partie A de la mémoire et transfert en 46,

- pour l'élément de mémorisation 48, du pixel $b_{ij}$, en même temps qu'il y a lecture du pixel $b_{i,j+1}$ dans la partie B de la mémoire.

Quant aux autres éléments, ils fournissent, lorsque $a^*_{i,j}$ est appliqué à 34 et 44 :

- pour l'élément de mémorisation 44, la valeur du pixel déjà transformé $a^*_{i,j-1}$ ;
- pour la mémoire 34, la valeur déjà transformée $a^*_{i-1,j+1}$ ;
- pour l'élément de mémorisation 36, la valeur déjà transformée $a^*_{i-1,j}$ ;
- pour l'élément de mémorisation 38, la valeur déjà transformée $a^*_{i-1,j-1}$.

Les opérations sont synchronisées par un signal d'horloge H provenant de la base de temps du système.

Lors du balayage en sens contraire, l'élément structurant associé à $a_{ij}$ subit une symétrie par rapport au point $a_{ij}$. Ainsi, l'élément de mémorisation du dispositif 41 qui contenait le pixel $a_{1,s}$ pendant le balayage direct contient à présent le pixel $a_{2i-1,2j-s}$.

Pour cela, le processeur 42 doit recevoir, en balayage video direct, les entrées

$$b_{ij} \text{ sur } E6$$

(b désignant un pixel en partie B de la mémoire 30 contenant l'image B)

$$a^*_{i-1,j+1} \text{ sur } E5$$

$$a^*_{i-1,j} \text{ sur } E4$$

$$a^*_{i-1,j-1} \text{ sur } E3$$

$$a^*_{i,j+1} \text{ sur } E2$$

$$a_{ij} \text{ sur } E1$$

La présentation en balayage video inverse se déduit de la précédente par symétrie de l'élément structurant autour de $a_{ij}$.

Le processeur 42 (figure 9) comprend deux opérateurs d'entrée 66 dont chacun est constitué par un comparateur suivi d'un multiplexeur. Le premier opérateur 66 par exemple reçoit les entrées E2 et E3 et fournit sur sa sortie un signal numérique représentatif de la plus grande des deux valeurs E2 et E3. Le second opérateur 66 a la même constitution mais reçoit les entrées E4 et E5. Les sorties des deux opérateurs 66 sont reliées aux deux entrées d'un second opérateur 68 ayant la même constitution que les premiers, fournissant donc sur sa sortie un signal numérique représentatif du maximum de E2,..., E5. Un autre opérateur 70, identique aux précédents, comporte une entrée reliée à la sortie de l'opérateur 68 et une seconde entrée qui reçoit E1. En conséquence, la sortie F de l'opérateur 70 représente le maximum de toutes les valeurs E1 à E5. Un dernier opérateur 72 reçoit la sortie de l'opérateur 70 et le signal E6, représentatif de $b_{ij}$ quel que soit le sens de balayage. La sortie S de ce dernier opérateur, constituée par Min (F, E6) est écrite dans la mémoire d'image par le bus d'écriture et est réinjectée dans les mémoires 44 et 34 pour servir au traitement des pixels suivants.

Dans un autre mode de mise en oeuvre de l'invention, on détecte les objets qui ont un contraste (par rapport au fond d'une image) dépassant une valeur prédéterminée par une séquence différente de transformations morphologiques. Suivant la forme et la taille des objets détectés, l'un ou l'autre des deux modes de mise en oeuvre de l'invention sera plus efficace. Quant aux calculs à effectuer, ils seront plus rapides dans l'un ou l'autre des cas suivant la machine disponible.

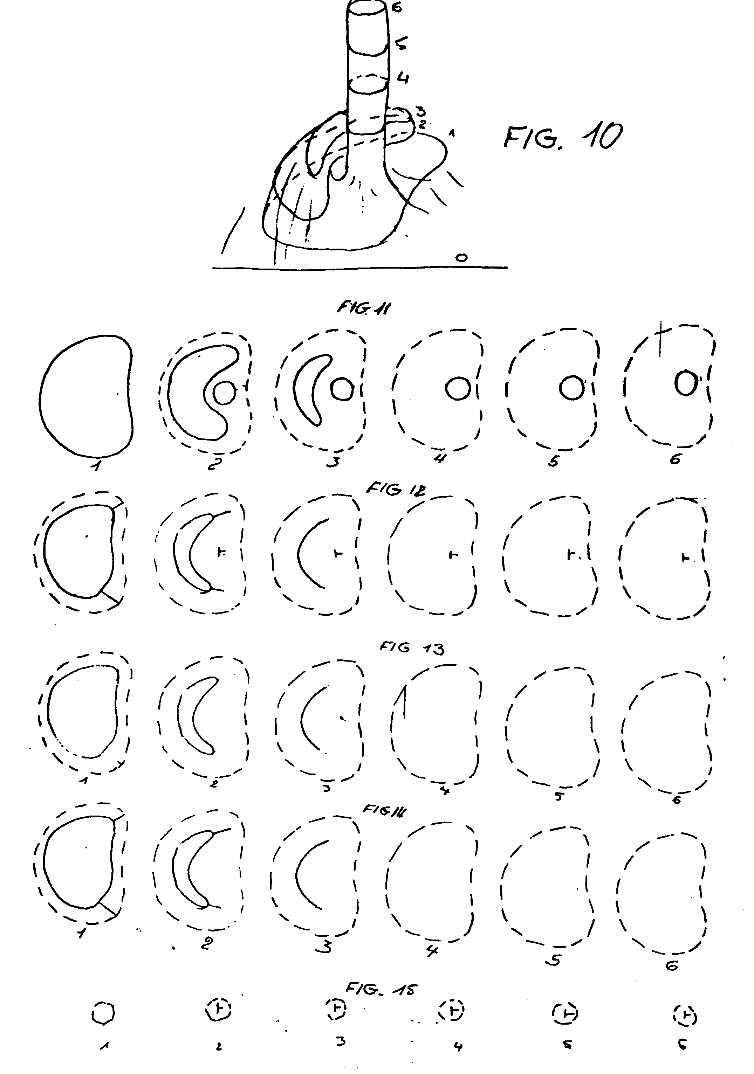

Le second mode de réalisation sera maintenant décrit dans son application à des objets ayant un contraste élevé sur un fond qui présente des différences notables de brillance. La figure 10 montre un objet dont on peut supposer qu'il a une brillance élevée, indiquée par 6, tandis que le fond peut présenter des variations de brillance notables indiquées par les niveaux 0, 1, 2 et 3. On supposera encore que chaque pixel $\underline{x}$ a une brillance représentée par une valeur d'une fonction numérique F (x). Les étapes seront alors les suivantes, lorsqu'on les applique à l'environnement de l'objet montré en figure 10.

1° - On soumet l'image à plusieurs étapes successives, en nombre $\underline{s}$, d'érosion homotopique telle que définie dans l'ouvrage de Gotcharian "Parallel Image Processes And Real Time Texture Analysis", Ph.D.Thesis, University College, London, 1980 and J.Serra, "Image Analysis and Mathematical Morphology", 1982, pp. 450-453.

Le résultat est une squelettisation partielle de l'image d'origine, qu'on désignera par $F_1^i$ (x) après $\underline{i}$ étapes d'érosion.

Si la fonction F(x) pour l'objet et son environnement a l'allure montrée en figure 10, on peut représenter F (x) par des ensembles de pixels, les pixels de chaque ensemble étant au-dessus d'un seuil déterminé particulier. Sur les figure 11.1 à 11.6, les ensembles de pixels correspondant à six seuils successifs, correspondant aux niveaux indiqués en figure 10, sont représentés. Le cas illustré correspond à six seuils seulement. Mais, dans la réalité, le nombre de seuils sera beaucoup plus important et égal au nombre de niveaux de gris qui peuvent être représentés avec la quantification disponible (250 niveaux par exemple). Les ensembles $F_1^i$ sont constitués par les seuils successifs de la fonction F1, dérivée de F par squelettisation en tons de gris au moins partielle. Les particules les plus grandes voient leur taille réduite, à la périphérie, d'une distance qui est proportionnelle au nombre d'étapes de squelettisation. S'il y a s étapes, les particules ayant une grande dimension inférieure à 2s sont remplacées par leur squelette, constitué de filaments de longueur variable (fig. 12.1 à 12.3). Les objets de plus petite taille et présentant un contraste sur le fond, telles que les cellules à détecter pour le typage HLA sont représentés, après transformation, par un empilement de niveaux dont le contenu est très caractéristique :

- une partie massive dans les niveaux les plus bas, correspondant au fond ;

- une séquence de M seuils (ou davantage) dans lesquels il y a un pixel ou un faisceau de filaments courts (figures 12.4 à 12.6) ayant une longueur inférieure à L, qu'on a défini ci-dessus, à l'emplacement de chaque cellule.

On peut identifier les autres particules du fait qu'elles présentent :

- une partie massive correspondant au fond,

- une succession de seuils dans lesquels il y a des filaments ayant une longueur supérieure à L,

- un nombre inférieur à M de seuils contenant un pixel ou des filaments de longueur inférieure à L.

L est une longueur prédéterminée et M un domaine de niveau de gris déterminé (définis sous forme de valeurs numériques) qui seront choisis par l'opérateur suivant les conditions de travail, par exemple en tenant compte de la taille des objets à détecter, du grandissement optique, etc...

2° - Pour mieux séparer les objets qui étaient initialement de petite taille avec un contraste élevé, le squelette numérique est soumis à un ébarbulage qui fait disparaître tous les filaments ayant une longueur au plus égale à L. On utilisera une étape d'ébarbulage ou plusieurs, ce qui génère les ensembles des figures 13 à partir des ensembles correspondants de la figure 12. Le nombre p d'étapes d'ébarbulage sera encore choisi en fonction des conditions de travail.

L'image qui résulte de l'ébarbulage est constituée d'éléments structurants qui peuvent être désignés par F2 et qui sont illustrés sur les figures 13.

3' - Le squelette ébarbulé constitue un marqueur des objets les plus grands et les moins contrastés dans l'image d'origine. Il a la même fonction que l'union des ouverts dans le premier mode de mise en oeuvre et il rend possible de revenir à la fonction F1 à partir de la fonction F2 pour de tels objets. On effectue alors une reconstruction de grains qui génère les aspects des figures 14. Les surfaces correspondant à tous les filaments ayant une longueur supérieure à L donnent naissance à des surfaces (Figures 14.1 à 14.3). Par contre, les filaments ayant une longueur inférieure à L qui ont été supprimés par l'ébarbulage ne réapparaissent pas.

On effectue une soustraction pixel par pixel des fonctions F1 (Figures 12) et F3 (Figures 14). On obtient ainsi des images représentées par une fonction F4, illustrée sur les figures 15. La fonction F4 consiste en l'empilement des petits filaments et des pixels perdus lors de la transformation de F1 en F3. L'empilement est constitué de M niveaux successifs ou davantage (par exemple deux seuils pour les particules intéressantes montrées en figures 10 à 15). L'empilement comprend moins de M seuils pour les autres particules.

Il suffit alors d'effectuer une opération de seuillage qui fait disparaître toutes les particules pour lesquelles il y a moins de M seuils pour détecter les particules qui sont petites et contrastées par rapport au fond.

**0214894**

Cette approche est donc tout à fait comparable dans ses effets à une transformation "chapeau haut de forme connexe".

On peut résumer de la façon suivante l'effet des différentes étapes.

On retient un pixel $\underline{x}$ si la particule X connexe au pixel $\underline{x}$, obtenue en retenant les valeurs supérieures à F1 (x) - H, ou H est un seuil prédéterminé correspondant au nombre M de seuils, disparaît après $\underline{s}$ étapes de squelettisation et $\underline{p}$ étapes d'ébarbulage. Cette disparition de la particule peut être déterminée de la façon suivante : tous les pixels de X ont disparus dans le seuillage de la fonction F2 obtenu par ébarbulage partiel de la fonction F1.

La même séquence de transformation que ci-dessus peut être effectuée sur une fonction F1 qui a été partiellement squelettisée plutôt que sur la fonction initiale F. Un autre test peut être le suivant : un pixel $x_i$ est retenu si la particule connexe $X_i$, obtenue en retenant uniquement les pixels ayant une valeur au moins égale à F $(x_i)$- H, ou H est un seuil prédéterminé, disparaît après $\underline{s}$ étapes de squelettisation suivies par $\underline{p}$ étapes d'ébarbulage de la fonction. La description de la particule peut encore être déterminée en retirant tous les pixels qui ont une altitude inférieure à F1 (x)-H, F1 étant la fonction F soumise à $\underline{p}$ étapes d'ébarbulage numérique.

Il existe déjà des machines morphologiques dont le logiciel permet de réaliser la quantitification de la brillance, la squelettisation et l'ébarbulage, entre autres fonctions.

Les applications de l'invention ne se limitent nullement au groupage HLA, ou même au domaine de la microlymphocyto-toxicité. Elle est applicable chaque fois qu'il est nécessaire de détecter des particules ayant un contraste élevé par rapport au fond local, et ayant une forme ou une orientation particulière.

**0214894**

REVENDICATIONS

1. Procédé de détection d'objets ayant un contraste par rapport au fond dépassant une valeur déterminée dans une image définie par des pixels x affectés chacun d'une valeur numérique F(x), caractérisé en ce qu'on effectue sur l'image une transformation consistant à retenir uniquement les pixels x tels que la particule connexe aux pixels, obtenue par seuillage à la valeur F(x)-H, où H est un seuil prédéterminé, n'est pas préservée par un processus de sélection basé sur des critères de formes et impliquant des transformations successives de morphologie mathématique qui font apparaître, uniquement dans les plus grandes particules, un marqueur à partir duquel ces particules peuvent être régénérées par reconstruction de grains.

2. Procédé selon la revendication 1, caractérisé en ce que seuls les pixels $\underline{x}$ dont la particule connexe ne contient aucun convexe appartenant à une famille prédéterminée sont retenus.

3. Procédé suivant la revendication 2, caractérisé en ce qu'on retient uniquement les pixels x tels que la particule connexe aux pixels, ne contient aucun segment de longueur R déterminée et ayant au moins une orientation déterminée.

4. Procédé selon la revendication 2, caractérisé en ce que ledit convexe est surfacique.

5. Procédé selon la revendication 4, caractérisé en ce que le convexe est: carré ou octogonal si l'image est définie par des pixels répartis suivant une trame carrée; hexagonal ou dodécagonal si la trame est hexagonale.

6. Procédé selon la revendication 1, caractérisé en ce que l'on retient les pixels dont la particule connexe disparaît lorsqu'elle est successivement soumise à $\underline{s}$ étapes de squelettisation partielle et _ étapes

d'ébarbulage, $\underline{s}$ et $\underline{p}$ étant des nombres entiers.

7. Procédé de détection selon l'une quelconque des revendications 1 à 6, caractérisé en ce que, dans le cas de l'estimation du nombre des cellules mortes en typage HLA, on effectue, après la transformation en contraste négatif, une mesure d'intégrale sur l'image ou une image dérivée, en vue de vérifier la qualité de mise au point, une ouverture binaire destinée à éliminer les objets trop petits, et une mesure du nombre de connexité, permettant d'estimer le nombre de cellules mortes.

8. Procédé selon la revendication 7, caractérisé en ce que, dans le cas de l'estimation du nombre de cellules vivantes, on effectue, après une transformation en contraste positif, une mesure de surface d'intégrale sur l'image ou une image dérivée, visant à vérifier la qualité de la mise au point, l'élimination des particules claires trouvées à l'intérieur d'un dilaté prédéterminé des cellules mortes détectées et enfin le comptage des cellules vivantes.

9. Dispositif de mise en oeuvre du procédé selon la revendication 2, 3 ou 4, caractérisé en ce qu'il comprend :

- un processeur morphologique de voisinage, permettant érosion, dilatation, ouverture (26) comportant une sortie reliée à un bus d'écriture (14) et une entrée reliée à deux bus de lecture (20, 22), par l'intermédiaire d'une unité de calcul (24) pouvant effectuer des opérations d'addition, de soustraction, de recherche de minimum et de maximum entre pixels présents simultanément sur les bus d'entrée,

- une mémoire d'images (30) comprenant plusieurs parties de capacité suffisante pour stocker chacune une image complète, dont l'entrée est reliée au bus d'écriture (14), permettant d'appliquer simultanément sur les deux bus de lecture (20, 22) les représentations num- riques de deux pixels correspondants de deux images stockées.

10. Dispositif selon la revendication 9, caractérisé en ce qu'il comporte un processeur morphologique de reconstruction de grains avec réécriture relié aux bus de lecture et agencé pour fournir sur le bus d'écriture (14) un pixel reconstruit à la fois, pour enregistrement dans la mémoire d'images (30).

0214894

FIG.1.

$x_i$

H

$X_i$

FIG.2.

$X_i$

R

$x_i$

$x_1$

$x_2$

$x_3$

$x_4$

R

FIG.3.

$u_2$

$u_1$

$X_a$

$x_a$

R

$x_b$

$X_b$

$R_1$

$R_2$

$X_c$

$x_c$

R

$X_d$

$x_d$

FIG.4.

$L_2$

$X_i$

$x_i$

FIG.5.

FIG.6.

FIG.7.

FIG.8.

0214894

FIG.9.

0214894

FIG. 10

FIG 11

FIG 12

FIG 13

FIG 14

FIG. 15

**Office européen
des brevets**

**RAPPORT DE RECHERCHE EUROPEENNE**

Numéro de la demande

**0214894**

EP  86 40 1774

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | J. SERRA: "Image Analysis and Mathematical Morphology", 1982, pages 424-478, Academic Press, Inc., London, GB<br>* Pages 424-478 * | 1 | G 06 M   11/04<br>G 06 F   15/70 |
| A,D | US-A-4 318 886   (KAWAHARA et al.)<br>* Abrégé * | 1 | |
| A | US-A-3 922 532   (KITCHENER et al.)<br>* Abrégé * | | |
| A | US-A-3 579 249   (R.D. DEWEY et al.)<br>* Abrégé * | | |

**DOMAINES TECHNIQUES RECHERCHES (Int. Cl.4)**

G 06 M   11/00
G 06 K    9/00

Le présent rapport de recherche a été établi pour toutes les revendications

| Lieu de la recherche<br>LA HAYE | Date d'achèvement de la recherche<br>24-11-1986 | Examinateur<br>SONIUS M.E. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82